# EUROPEAN PATENT SPECIFICATION

(11) **EP 4 016 793 B1**
(45) Date of publication and mention of the grant of the patent: **16.10.2024**
(21) Application number: 20895132.7
(22) Date of filing: 03.12.2020
(51) Int. Cl.: H02J 7/04, H02J 7/02, H02J 50/80

(54) **METHOD FOR IMPLEMENTING TEMPERATURE CONTROL FOR WIRELESS CHARGING SYSTEM**
VERFAHREN ZUR IMPLEMENTIERUNG DER TEMPERATURREGELUNG FÜR EIN DRAHTLOSES LADESYSTEM
PROCÉDÉ DE MISE EN OEUVRE D'UNE RÉGULATION DE TEMPÉRATURE POUR UN SYSTÈME DE CHARGE SANS FIL

(30) Priority: 03.12.2019 CN 201911221761
(43) Date of publication of application: 22.06.2022
(73) Proprietor: CRM ICBG (WUXI) CO., LTD., Wuxi, Jiangsu 214135 (CN)
(72) Inventor: WANG, Zhenli, Wuxi, Jiangsu 214135 (CN); PU, Mengjun, Wuxi, Jiangsu 214135 (CN); CHEN, Chunman, Wuxi, Jiangsu 214135 (CN)
(74) Representative: Canzler & Bergmeier Patentanwälte Partnerschaft mbB
(86) International application number: PCT/CN2020/133583
(87) International publication number: WO 2021/110093

(56) References cited:
- WO-A1-2018/212499
- CN-A- 104 335 446
- CN-A- 105 144 535
- CN-A- 106 558 895
- CN-A- 107 801 237
- CN-A- 108 879 887
- CN-A- 110 729 808
- KR-A- 20180 064 741
- US-A1- 2012 299 540
- US-A1- 2013 307 348

## Description

### Technical Field

The present disclosure relates to the field of energy transmission, and in particular, to the field of wireless charging, and specifically refers to a method for implementing temperature control for a wireless charging system.

### Background

Wireless charging is a technology using electromagnetic fields or electromagnetic waves for energy transmission. Currently, it is widely used for low power applications, mainly for a smart phone, a microcomputer, a small portable household appliance and the like. In a wireless charging system, regardless of positions of a transmitting end coil and a receiving end coil, a transmitting end will adjust an output power according to a data packet sent by a receiving end to meet requirements of the receiving end.

The existing technology is suitable for a system working at a close distance and having a small position offset. For example, KR 20180064741 A discloses that the maximum transmission distance of wireless power transmission via the magnetic induction method is 1 centimeter or less, WO 2018/212499 A1 discloses that in an electromagnetic resonance scheme, a magnetic field generated by a transmission coil of a wireless power transmitter is tuned to a specific resonance frequency to transmit power to a wireless power receiver located in close proximity, and US 2013/307348 A1 discloses that electromagnetic induction works on the principle of a primary coil generating a predominantly magnetic field and a secondary coil being within that field so that a current is induced in the secondary, as the distance from the primary is increased, more and more of the magnetic field misses the secondary, even over a relatively short range the induction method is rather inefficient, wasting much of the transmitted energy, and the main drawback to wireless transmission is short range. In addition, Qi, as the technical specification of a system for inductive charging that uses the protocol established by the Wireless Power Consortium (WPC), discloses that the distance from the secondary coil to the primary coil should be in a range of 4-5 mm. For a system working at a far distance and having a large offset distance, to ensure normal operation of the receiving end, a charging current of the transmitting end is relatively large, causing serious heating of components of the transmitting end, and burnout and failure of the components after long-time working.

### Summary

The objective of the present disclosure is to overcome the above-mentioned shortcomings in the prior art and provide a method for implementing temperature control for a wireless charging system, which achieves a good effect, is easy to operate, and has a wide application range.

To achieve the above-mentioned objective, the method for implementing temperature control for a wireless charging system in the present disclosure is as follows:

the method for implementing temperature control for a wireless charging system includes the following steps:
(1) initializing a power control flag to an initial value;
(2) calculating, by a transmitting end, power loss according to a transmitting power of the transmitting end and a received power of a receiving end;
(3) determining, by the transmitting end, whether a value of the power loss is greater than a preset power loss threshold, and if so, performing step (4); otherwise, adjusting, by the transmitting end, an operating frequency according to an actual data packet sent by the receiving end, and performing step (2); and
(4) determining, by the transmitting end, whether a value of the received power of the receiving end is less than a preset received power threshold, and if so, skipping adjusting, by the transmitting end, the operating frequency and exiting the step; otherwise, adjusting, by the transmitting end, the operating frequency and performing step (2).

Preferably, step (3) specifically includes the following steps:
(3.1) determining, by the transmitting end, whether the power loss is greater than the preset power loss threshold, and if so, setting the power control flag to a flag value and performing step (3.2); otherwise, performing step (3.2); and
(3.2) determining, by the transmitting end, whether the power control flag is the initial value, and if so, skipping setting a power limit for the receiving end, and adjusting, by the transmitting end, the operating frequency according to the actual data packet sent by the receiving end, and performing step (2); otherwise, performing step (4).

Preferably, in step (4), the adjusting, by the transmitting end, the operating frequency specifically includes the following steps:
reducing, by the transmitting end, the received power of the receiving end.

Preferably, the reducing, by the transmitting end, the received power of the receiving end specifically includes the following steps:
adjusting, by the transmitting end, the operating frequency through a fixed negative value to reduce the received power of the receiving end.

Preferably, the method further includes a step of setting the power loss threshold, which specifically includes the following steps:
(1.1) initializing the power control flag to the initial value, adjusting a position of the wireless charging system, and testing a temperature of board components of the transmitting end after the wireless charging system works for a preset test time; and
(1.2) determining whether the temperature exceeds a preset temperature, and if so, determining that a value of power loss at the position is the power loss threshold; otherwise, performing step (1.1).

Preferably, the adjusting of the position of the wireless charging system in step (1.1) specifically includes the following operation:
adjusting an offset position of the wireless charging system with a vertical distance unchanged.

Preferably, the initial value of the power control flag is 0.

Preferably, the flag value of the power control flag is 1.

Preferably, the preset test time in step (1.1) is 20 minutes.

Preferably, the preset temperature in step (1.1) is 60 °C.

The method for implementing temperature control for a wireless charging system in the present disclosure solves the problem that the charging current of the transmitting end is excessively large and the temperature of the board components of the transmitting end is excessively high when the wireless charging system works at a relatively remote position, causing burnout of the components. For a system working at a far distance and having coil centers with a relatively large position offset, heating of the components of the transmitting end can be effectively reduced, and normal and stable operation of the system can be ensured.

### Brief Description of the Drawings

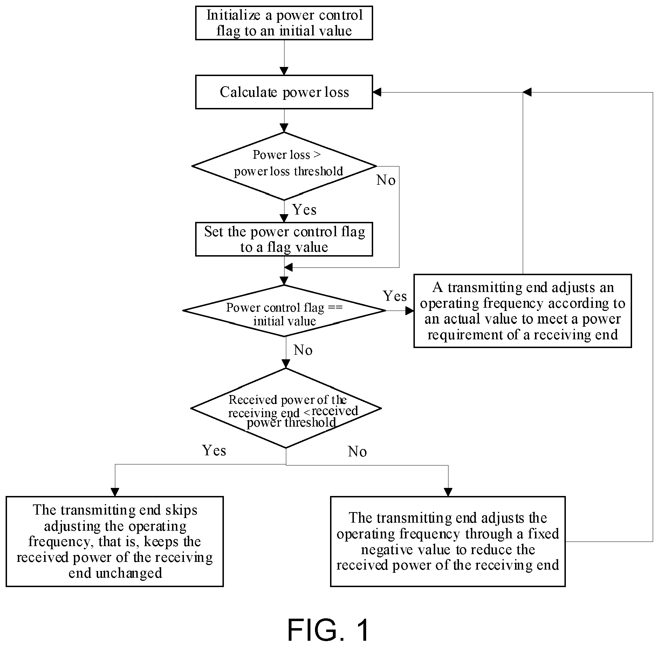

Fig. 1 is a flowchart of a method for implementing temperature control for a wireless charging system in the present disclosure.

### Detailed Description of the Preferred Embodiments

To describe the technical content of the present disclosure more clearly, further descriptions are provided below in combination with specific embodiments.

The method for implementing temperature control for a wireless charging system in the present disclosure includes the following steps:
(1) Initialize a power control flag to an initial value.
   (1.1) Initialize the power control flag to the initial value, adjust a position of the wireless charging system, and test a temperature of board components of the transmitting end after the wireless charging system works for a preset test time; and
      adjust an offset position of the wireless charging system with a vertical distance unchanged.
   (1.2) Determine whether the temperature exceeds a preset temperature, and if so, determine that a value of power loss at the position is a power loss threshold; otherwise, perform step (1.1).
(2) The transmitting end calculates power loss according to a transmitting power of the transmitting end and a received power of a receiving end.
(3) The transmitting end determines whether a value of the power loss is greater than a preset power loss threshold, and if so, performs step (4); otherwise, the transmitting end adjusts an operating frequency, and performs step (2).
   (3.1) The transmitting end determines whether the power loss is greater than the preset power loss threshold, and if so, sets the power control flag to a flag value and performs step (3.2); otherwise, the transmitting end performs step (3.2).
   (3.2) The transmitting end determines whether the power control flag is the initial value, and if so, the transmitting end skips setting a power limit for the receiving end, adjusts the operating frequency according to the actual data packet sent by the receiving end, and performs step (2); otherwise, the transmitting end performs step (4).
(4) The transmitting end determines whether a value of the received power of the receiving end is less than a preset received power threshold, and if so, the transmitting end skips adjusting the operating frequency and exits the step; otherwise, the transmitting end reduces the received power of the receiving end and performs step (2);
   the transmitting end reduces the received power of the receiving end; and
   adjusts the operating frequency through a fixed negative value to reduce the received power of the receiving end.

In a preferred embodiment of the present disclosure, the initial value of the power control flag is 0.

In a preferred embodiment of the present disclosure, the flag value of the power control flag is 1.

In a preferred embodiment of the present disclosure, the preset test time in step (1.1) is 20 minutes.

In a preferred embodiment of the present disclosure, the preset temperature in step (1.1) is 60 °C.

In specific embodiments of the present disclosure, the present disclosure solves the problem that when a wireless charging system works at a far distance (about 20 mm) and has a relatively large position offset during working, that is, a horizontal offset distance between a center position of the transmitting end coil and a center position of a receiving end coil is about 15 mm to 20 mm, long-time working of the wireless charging system causes an excessively large charging current of the transmitting end and overheating of the board components. As a result, the components are burned out, and the system cannot work normally. For a system working at a far distance and having coil centers with a relatively large position offset, the wireless charging transmitting end reduces heating of the components of the transmitting end by limiting the received power of the receiving end, to ensure normal operation of the wireless charging system.

A flowchart for implementing temperature control for a wireless charging system in this embodiment is shown in Fig. 1:
(1) Initialize a power control flag to 0.
(2) A transmitting end calculates power loss, that is, PowerLoss, according to a transmitting power of the transmitting end and a received power of the receiving end, and performs step (3).
(3) Then, determine whether a value of the power loss is greater than a preset power loss threshold PowerLossTemp, and if so, perform step (3); otherwise, perform step (5).
(4) Set a power control flag LossPowerLimitFlag to 1, that is, the transmitting end limits the received power of the receiving end, and performs step (5).
(5) Determine whether the power control flag LossPowerLimitFlag is 0, if the power control flag is 0, the power loss has not reached the preset power loss threshold, and it is unnecessary to set the power limit for the receiving end, and step (6) is performed; otherwise, step (7) is performed.
(6) The transmitting end skips limiting the received power of the receiving end, and the transmitting end adjusts the operating frequency according to the actual data packet sent by the receiving end to meet a power requirement of the receiving end.
(7) The transmitting end limits the received power of the receiving end, and determines whether the value of the received power of the receiving end is less than a preset received power threshold ReceiverPower, and if so, the transmitting end performs step (8); otherwise, the transmitting end reduces the received power of the receiving end, that is, performs step (9).
(8) The transmitting end skips adjusting the operating frequency to keep the received power of the receiving end unchanged.
(9) The transmitting end adjusts the operating frequency by using a fixed negative value to reduce the received power of the receiving end.

### Set the power loss threshold:

While the vertical distance remains unchanged, the wireless charging system works at each offset position for 20 minutes to test the temperature of the board components of the transmitting end. If the temperature exceeds 60 °C, the value of power loss at the offset position is used as the power loss threshold; otherwise, the system is in a safe state.

In the specific embodiments of the present disclosure, in a case that the wireless charging system works at a vertical distance of 18 mm to 20 mm and an offset position of 18 mm to 20 mm, with the traditional method, a temperature of MOS transistors of the transmitting end reaches the highest and exceeds 75°C after the wireless charging system works for more than 15 minutes. Using the method of the present disclosure, under the same working conditions, the temperature of the MOS transistors of the transmitting end is lower than 60°C.

The method for implementing temperature control for a wireless charging system in the present disclosure solves the problem that the charging current of the transmitting end is excessively large and the temperature of the board components of the transmitting end is excessively high when the wireless charging system works at a relatively remote position, causing burnout of the components. For a system working at a far distance and having coil centers with a relatively large position offset, heating of the components of the transmitting end can be effectively reduced, and normal and stable operation of the system can be ensured.

In this specification, the present disclosure has been described with reference to the specific embodiments. The description and drawings should be regarded as illustrative rather than restrictive.

## Claims

1. A method for implementing temperature control for a wireless charging system, comprising the following steps:
(1) initializing a power control flag to an initial value;
(2) calculating, by a transmitting end, a power loss according to a transmitting power of the transmitting end and a received power of a receiving end;
**characterized in that** the method further comprises the following steps:
(3.1) determining, by the transmitting end, whether the power loss is greater than a preset power loss threshold, and if so, setting the power control flag to a flag value and performing step (3.2); otherwise, performing step (3.2); and
(3.2) determining, by the transmitting end, whether the power control flag is the initial value, and if so, adjusting, by the transmitting end, the operating frequency according to an actual data packet sent by the receiving end, and performing step (2); otherwise, performing step (5);
(5) determining, by the transmitting end, whether a value of the received power of the receiving end is less than a preset received power threshold, and if so, skipping adjusting, by the transmitting end, the operating frequency and exiting the step; otherwise, adjusting, by the transmitting end, the operating frequency and performing step (2).

2. The method for implementing temperature control for a wireless charging system as in claim 1, wherein, in step (3.2), if the transmitting end determines that the power control flag is the initial value, the method specifically comprises:
adjusting, by the transmitting end, the operating frequency according to the actual data packet sent by the receiving end, and performing step (2).

3. The method for implementing temperature control for a wireless charging system as in claim 1, wherein the adjusting, by the transmitting end, the operating frequency specifically comprises the following steps:
reducing, by the transmitting end, the received power of the receiving end.

4. The method for implementing temperature control for a wireless charging system as in claim 3, wherein the reducing, by the transmitting end, the received power of the receiving end specifically comprises the following steps:
adjusting, by the transmitting end, the operating frequency through a fixed negative value to reduce the received power of the receiving end.

5. The method for implementing temperature control for a wireless charging system as in claim 1, wherein step (1) further comprises a step of setting the power loss threshold, which specifically comprises the following steps:
(1.1) initializing the power control flag to the initial value, adjusting a position of the wireless charging system, and acquiring a temperature of board components of the transmitting end after the wireless charging system works for a preset test time; and
(1.2) determining whether the temperature exceeds a preset temperature, and if so, determining that a value of power loss at the position is the power loss threshold; otherwise, performing step (1.1).

6. The method for implementing temperature control for a wireless charging system as in claim 5, wherein in step (1.1), the adjusting a position of the wireless charging system specifically comprises the following operation:
adjusting an offset position of the wireless charging system with a vertical distance unchanged.

7. The method for implementing temperature control for a wireless charging system as in claim 6, wherein the vertical distance is 18 mm to 20 mm.

8. The method for implementing temperature control for a wireless charging system as in claim 6, wherein the offset position is 18 mm to 20 mm.

9. The method for implementing temperature control for a wireless charging system as in claim 1, wherein the initial value of the power control flag is 0.

10. The method for implementing temperature control for a wireless charging system as in claim 1, wherein the flag value of the power control flag is 1.

11. The method for implementing temperature control for a wireless charging system as in claim 5, wherein the preset test time in step (1.1) is 20 minutes.

12. The method for implementing temperature control for a wireless charging system as in claim 5, wherein the preset temperature in step (1.1) is 60 °C.

## Patentansprüche

1. Verfahren zum Implementieren einer Temperatursteuerung für ein drahtloses Ladesystem, das die folgenden Schritte umfasst:
(1) Initialisieren einer Leistungssteuerungsflag auf einen Startwert;
(2) Berechnen, eines Leistungsverlustes durch ein Übertragungsende gemäß einer Übertragungsleistung des Übertragungsendes und einer Empfangsleistung eines Empfangsendes;
**dadurch gekennzeichnet, dass** das Verfahren ferner die folgenden Schritte umfasst:
(3.1) Bestimmen durch das Übertragungsende, ob der Leistungsverlust größer als ein voreingestellter Leistungsverlustschwellenwert ist, und wenn dies der Fall ist, Setzen der Leistungssteuerungsflag auf einen Flag-Wert und Durchführen von Schritt (3.2); andernfalls Durchführen von Schritt (3.2); und
(3.2) Bestimmen durch das Übertragungsende, ob die Leistungssteuerungsflag der Startwert ist, und wenn dies der Fall ist, Anpassen, der Betriebsfrequenz durch das Übertragungsende gemäß einem tatsächlichen Datenpaket, das mittels des Empfangsendes gesendet wird, und Durchführen von Schritt (2); andernfalls Durchführen von Schritt (5);
(5) Bestimmen durch das Übertragungsende, ob ein Wert der Empfangsleistung des Empfangsendes kleiner als ein voreingestellter Empfangsleistungsschwellenwert ist, und wenn dies der Fall ist, Überspringen des Anpassens der Betriebsfrequenz durch das Übertragungsende und Beenden des Schritts; andernfalls Anpassen der Betriebsfrequenz durch das Übertragungsende und Durchführen von Schritt (2).

2. Verfahren zum Implementieren einer Temperatursteuerung für ein drahtloses Ladesystem nach Patentanspruch 1, wobei in Schritt (3.2), wenn das Übertragungsende bestimmt, dass die Leistungssteuerungsflag der Startwert ist, das Verfahren insbesondere umfasst:
Anpassen, der Betriebsfrequenz durch das Übertragungsende gemäß dem tatsächlichen Datenpaket, das mittels des Empfangsendes gesendet wird, und Durchführen von Schritt (2).

3. Verfahren zum Implementieren einer Temperatursteuerung für ein drahtloses Ladesystem nach Patentanspruch 1, wobei das Anpassen der Betriebsfrequenz durch das Übertragungsende insbesondere die folgenden Schritte umfasst:
Reduzieren, der Empfangsleistung des Empfangsendes durch das Übertragungsende.

4. Verfahren zum Implementieren einer Temperatursteuerung für ein drahtloses Ladesystem nach Patentanspruch 3, wobei das Reduzieren der Empfangsleistung des Empfangsendes durch das Übertragungsende insbesondere die folgenden Schritte umfasst:
Anpassen der Betriebsfrequenz durch das Übertragungsende mittels eines festen negativen Werts, um die Empfangsleistung des Empfangsendes zu reduzieren.

5. Verfahren zum Implementieren einer Temperatursteuerung für ein drahtloses Ladesystem nach Patentanspruch 1, wobei Schritt (1) ferner einen Schritt des Setzens des Leistungsverlustschwellenwerts umfasst, der insbesondere die folgenden Schritte umfasst:
(1.1) Initialisieren der Leistungssteuerungsflag auf den Startwert, Anpassen einer Position des drahtlosen Ladesystems und Erfassen einer Temperatur von Platinenkomponenten des Übertragungsendes, nachdem das drahtlose Ladesystem für eine voreingestellte Testzeit arbeitet; und
(1.2) Bestimmen, ob die Temperatur eine voreingestellte Temperatur überschreitet, und wenn dies der Fall ist, Bestimmen, dass ein Wert des Leistungsverlustes an der Position der Leistungsverlustschwellenwert ist; andernfalls Durchführen von Schritt (1.1).

6. Verfahren zum Implementieren einer Temperatursteuerung für ein drahtloses Ladesystem nach Patentanspruch 5, wobei in Schritt (1.1) das Anpassen einer Position des drahtlosen Ladesystems insbesondere den folgenden Vorgang umfasst:
Anpassen einer versetzten Position des drahtlosen Ladesystems mit einem unveränderten vertikalen Abstand.

7. Verfahren zum Implementieren einer Temperatursteuerung für ein drahtloses Ladesystem nach Patentanspruch 6, wobei der vertikale Abstand 18 mm bis 20 mm beträgt.

8. Verfahren zum Implementieren einer Temperatursteuerung für ein drahtloses Ladesystem nach Patentanspruch 6, wobei die versetzte Position 18 mm bis 20 mm beträgt.

9. Verfahren zum Implementieren einer Temperatursteuerung für ein drahtloses Ladesystem nach Patentanspruch 1, wobei der Startwert der Leistungssteuerungsflag 0 beträgt.

10. Verfahren zum Implementieren einer Temperatursteuerung für ein drahtloses Ladesystem nach Patentanspruch 1, wobei der Flag-Wert der Leistungssteuerungsflag 1 beträgt.

11. Verfahren zum Implementieren einer Temperatursteuerung für ein drahtloses Ladesystem nach Patentanspruch 5, wobei die voreingestellte Testzeit in Schritt (1.1) 20 Minuten beträgt.

12. Verfahren zum Implementieren einer Temperatursteuerung für ein drahtloses Ladesystem nach Patentanspruch 5, wobei die voreingestellte Temperatur in Schritt (1.1) 60 °C beträgt.

## Revendications

1. Procédé de mise en oeuvre d'un contrôle de température pour un système de charge sans fil, comprenant les étapes suivantes :
(1) initialiser un drapeau de contrôle de puissance à une valeur initiale ;
(2) calculer, par une extrémité de transmission, une perte de puissance en fonction d'une puissance de transmission de l'extrémité de transmission et d'une puissance reçue d'une extrémité de réception ;
**caractérisé en ce que** le procédé comprend en outre les étapes suivantes :
(3.1) déterminer, par l'extrémité de transmission, si la perte de puissance est supérieure à un seuil de perte de puissance prédéfini, et si c'est le cas, régler le drapeau de contrôle de puissance à une valeur de drapeau et exécuter l'étape (3.2) ; sinon, exécuter l'étape (3.2) ; et
(3.2) déterminer, par l'extrémité de transmission, si le drapeau de contrôle de puissance est la valeur initiale, et si c'est le cas, ajuster, par l'extrémité de transmission, la fréquence de fonctionnement en fonction d'un paquet de données réel envoyé par l'extrémité de réception, et exécuter l'étape (2) ; sinon, exécuter l'étape (5) ;
(5) déterminer, par l'extrémité de transmission, si une valeur de la puissance reçue de l'extrémité de réception est inférieure à un seuil de puissance reçue prédéfini, et si c'est le cas, dépasser de ajuster, la fréquence de fonctionnement par l'extrémité de transmission et quitter l'étape ; sinon, ajuster, par l'extrémité de transmission, la fréquence de fonctionnement et exécuter l'étape (2).

2. Procédé de mise en oeuvre d'un contrôle de température pour un système de charge sans fil selon la revendication 1, dans lequel, à l'étape (3.2), si l'extrémité de transmission détermine que le drapeau de contrôle de puissance est la valeur initiale, le procédé comprend spécifiquement :
ajuster, la fréquence de fonctionnement par l'extrémité de transmission en fonction du paquet de données réel envoyé par l'extrémité de réception, et exécuter l'étape (2).

3. Procédé de mise en oeuvre d'un contrôle de température pour un système de charge sans fil selon la revendication 1, dans lequel ajuster, la fréquence de fonctionnement par l'extrémité de transmission comprend spécifiquement les étapes suivantes :
réduire, la puissance reçue de l'extrémité de réception par l'extrémité de transmission.

4. Procédé de mise en oeuvre d'un contrôle de température pour un système de charge sans fil selon la revendication 3, dans lequel réduire, la puissance reçue de l'extrémité de réception par l'extrémité de transmission comprend spécifiquement les étapes suivantes :
ajuster, la fréquence de fonctionnement par l'extrémité de transmission par l'intermédiaire d'une valeur négative fixe pour réduire la puissance reçue de l'extrémité de réception.

5. Procédé de mise en oeuvre d'un contrôle de température pour un système de charge sans fil selon la revendication 1, dans lequel l'étape (1) comprend en outre une étape consistant à régler le seuil de perte de puissance, qui comprend spécifiquement les étapes suivantes :
(1.1) initialiser le drapeau de contrôle de puissance à la valeur initiale, ajuster une position du système de charge sans fil, et acquérir une température de composants de tableau de l'extrémité de transmission après que le système de charge sans fil fonctionne pendant un temps de test prédéfini ; et
(1.2) déterminer si la température dépasse une température prédéfinie, et si c'est le cas, déterminer qu'une valeur de perte de puissance à la position est le seuil de perte de puissance ; sinon, exécuter l'étape (1.1).

6. Procédé de mise en oeuvre d'un contrôle de température pour un système de charge sans fil selon la revendication 5, dans lequel à l'étape (1.1), ajuster une position du système de charge sans fil comprend spécifiquement l'opération suivante :
ajuster une position décalée du système de charge sans fil avec une distance verticale inchangée.

7. Procédé de mise en oeuvre d'un contrôle de température pour un système de charge sans fil selon la revendication 6, dans lequel la distance verticale est de 18 mm à 20 mm.

8. Procédé de mise en oeuvre d'un contrôle de température pour un système de charge sans fil selon la revendication 6, dans lequel la position décalée est de 18 mm à 20 mm.

9. Procédé de mise en oeuvre d'un contrôle de température pour un système de charge sans fil selon la revendication 1, dans lequel la valeur initiale du drapeau de contrôle de puissance est 0.

10. Procédé de mise en oeuvre d'un contrôle de température pour un système de charge sans fil selon la revendication 1, dans lequel la valeur de drapeau du drapeau de contrôle de puissance est 1.

11. Procédé de mise en oeuvre d'un contrôle de température pour un système de charge sans fil selon la revendication 5, dans lequel le temps de test prédéfini à l'étape (1.1) est de 20 minutes.

12. Procédé de mise en oeuvre d'un contrôle de température pour un système de charge sans fil selon la revendication 5, dans lequel la température prédéfinie à l'étape (1.1) est de 60 °C.
